# EUROPÄISCHE PATENTSCHRIFT

(11) **EP 2 580 630 B1**
(45) Veröffentlichungstag und Bekanntmachung des Hinweises auf die Patenterteilung: **10.10.2018**
(21) Anmeldenummer: 11726649.4
(22) Anmeldetag: 09.06.2011
(51) Int. Cl.: G05D 23/19

(54) **VERFAHREN ZUM EINSTELLEN DES VOLUMENSTROMES VON HEIZ- UND/ODER KÜHLMEDIUM DURCH RAUMWÄRMETAUSCHER EINER HEIZUNGS- BZW. KÜHLANLAGE**
METHOD FOR SETTING THE VOLUMETRIC FLOW OF HEATING AND/OR COOLING MEDIUM THROUGH SPACE HEAT EXCHANGERS OF A HEATING AND/OR COOLING SYSTEM
PROCÉDÉ DE RÉGLAGE DU DÉBIT VOLUMIQUE D'UN MILIEU CHAUFFANT ET/OU RÉFRIGÉRANT AU MOYEN D'ÉCHANGEURS DE CHALEUR AMBIANTE D'UNE INSTALLATION DE CHAUFFAGE OU DE REFROIDISSEMENT

(30) Priorität: 09.06.2010 AT 9442010
(43) Veröffentlichungstag der Anmeldung: 17.04.2013
(73) Patentinhaber: myWarm GmbH, 1040 Wien (AT)
(72) Erfinder: LÖBLICH, Maximilian, A-1190 Wien (AT); HÜBNER, Bertram, A-1130 Wien (AT)
(74) Vertreter: Keschmann, Marc
(86) Internationale Anmeldenummer: PCT/AT2011/000258
(87) Internationale Veröffentlichungsnummer: WO 2011/153572

(56) Entgegenhaltungen:
- AU-A1- 2008 229 674
- US-A- 5 622 221
- US-A1- 2007 267 170

## Beschreibung

Die Erfindung betrifft ein Verfahren zum Einstellen des Volumenstromes von Heiz- und/oder Kühlmedium durch Raumwärmetauscher einer Heizungs- bzw. Kühlanlage, bei welchem die Zielspreizung der Vorlauf- und Rücklauftemperaturen der einzelnen Raumwärmetauscher jeweils durch eine einstellbare und/oder fixierbare Begrenzung des jeweiligen Raumwärmetauscherventils eingestellt wird.

Derartige Verfahren werden in der Regel angewendet, um bei Heizungsanlagen den vom Anwender mit Hilfe des Raumwärmetauscherventils maximal einstellbaren Durchfluss durch die einzelnen Raumwärmetauscher dahingehend zu begrenzen, dass dann, wenn die Ventile vollständig geöffnet sind, alle Raumwärmetauscher derart mit Heizmedium versorgt werden, dass an allen Raumwärmetauschern die gleiche Spreizung auftritt (hydraulischer Abgleich). Die unterschiedliche Versorgung mit Heizmedium liegt darin begründet, dass die hydraulischen Widerstände von der Pumpe durch die Rohrleitungen zu den einzelnen Raumwärmetauschern aufgrund der unterschiedlichen Rohrdimensionen und -längen und aufgrund von Umlenkungen relativ stark variieren.

Unter Raumwärmetauschern werden im Zusammenhang mit der vorliegenden Erfindung Heizkörper bzw. Radiatoren sowie Kühlkörper, beispielsweise von Klimaanlagen verstanden, an denen die Raumluft erwärmt oder gekühlt wird. Unter Spreizung versteht man auf dem betreffenden technischen Gebiet die Differenz zwischen der Vorlauf- und der Rücklauftemperatur des Heizmediums, die auftritt, wenn das Heizmedium durch den Raumwärmetauscher fließt und dabei Wärme an den zu heizenden bzw. zu kühlenden Raum abgibt. In der vorliegenden Beschreibung wird der Einfachheit halber zumeist von Heizen gesprochen wird, es ist jedoch immer auch der Fall des Kühlens eines Raumes denkbar und gemeint.

Die Spreizung hängt unter anderem zum einen von der Umgebungstemperatur des Raumwärmetauschers ab, zum anderen jedoch vor allem davon, wie hoch der Durchfluss des Heizmediums durch den Raumwärmetauscher ist, da klarerweise bei einem hohen Durchfluss, d.h. einer kurzen Verweilzeit im Raumwärmetauscher, das Medium relativ wenig abkühlt und bei einem geringen Durchfluss, d.h. bei einer langen Verweilzeit, eine relativ starke Abkühlung im Raumwärmetauscher erfolgt. Bei einem hohen Durchfluss durch einen Raumwärmetauscher, gleichbedeutend mit einer geringen Spreizung, wird der Raumwärmetauscher mit einer hohen Heizleistung betrieben, da die gesamte Heizfläche des Raumwärmetauschers genutzt wird und somit viel Wärme an die Umgebung abgegeben wird.

Um eine Heizungsanlage energetisch effizient zu betreiben, ist je nach Wärmegerät eine bestimmte Rücklauftemperatur des Heizmediums zum Heizgerät anzustreben und es ist generell ein möglichst niedriges Temperaturniveau anzustreben. Lediglich bei Heizkesseln aus Stahl ist eine Rücklauftemperatur von unter 35° C insofern ungünstig, als es aufgrund der dann auftretenden Kondensation des Wasserdampfes des Abgases zu Korrosionsproblemen kommen kann. Bei modernen Brennwert-Heizgeräten wird jedoch wiederum eine niedrige Rücklauftemperatur benötigt, um die im Abgas enthaltene Feuchtigkeit an entsprechenden Wärmetauschern zu kondensieren und die dabei gewonnene Kondensationswärme für die Aufwärmung des Heizmediums nutzen zu können.

Der eingangs genannte hydraulische Abgleich auf eine bei allen Raumwärmetauschern einer Heizungsanlage idente Spreizung ist nur dann energetisch günstig, wenn jeder Raum bzw. Bereich des zu beheizenden Objekts tatsächlich mit jeweils optimal dimensionierten Raumwärmetauschern ausgestattet ist. In der Praxis ist dies jedoch so gut wie nie der Fall, da beim Einbau von Raumwärmetauschern nicht nur deren energietechnische Eignung berücksichtigt wird, sondern auch ästhetische Aspekte und insbesondere in der Abschlussphase eines Bauvorhabens deren tatsächliche Verfügbarkeit zum gewünschten Einbauzeitpunkt eine Rolle spielen. Raumwärmetauscher stehen außerdem nicht stufenlos in jeder Leistung zur Verfügung. Dies führt dazu, dass eine optimale Dimensionierung der Raumwärmetauscher in einem Raum oder Bereich praktisch nur sehr selten erreicht wird, sodass ein hydraulischer Abgleich gemäß dem Stand der Technik auf eine idente Spreizung bei allen Raumwärmetauschern den tatsächlichen energetischen Erfordernissen nicht gerecht wird. Darüber hinaus werden Heizungsanlagen vor allem in privaten Bereichen in der Regel nicht nach energietechnischen Gesichtspunkten betrieben, sondern der Anwender regelt die Raumwärmetauscherventile bzw. Thermostatköpfe kurzfristig nach dem subjektiven Kälteempfinden, sodass häufig von einzelnen Raumwärmetauschern ungünstig hohe Heizleistungen verlangt werden, während in anderen Bereichen sehr niedrige Temperaturen als vermeintliche Sparmaßnahme gewählt werden. Besonders niedrige Temperaturen in Räumen neben Räumen hoher Temperatur führen jedoch zu einem Wärmeverlust der Räume hoher Temperatur (vor allem bei offenen Türen), sodass, um die in diesen Räumen geforderte Temperatur zu halten, die Raumwärmetauscher wiederum mit einer sehr hohen Heizleistung betrieben werden müssen, was insgesamt die Rücklauftemperatur des Systems erhöht und somit die Effizienz der Heizungsanlage herabsetzt.

Das Dokument US 2007/267170 offenbart ein Verfahren zum Heizen bzw. Kühlen eines Gebäudes mithilfe eines Heiz- bzw. Kühlmediums, wobei das Gebäude in Zonen aufgeteilt ist und für jede dieser zonen eine Regeleinrichtung vorgesehen ist.

Es ist somit Aufgabe der vorliegenden Erfindung, die Raumwärmetauscher einer Heizungsanlage derart einzustellen bzw. hydraulisch abzugleichen, dass Unter- bzw. Überdimensionierungen bzw. energetisch ungünstige Benutzeranforderungen berücksichtigt werden, gleichzeitig jedoch die Rücklauftemperatur der gesamten Anlage auf einem günstigen Niveau gehalten wird.

Zur Lösung dieser Aufgabe ist ein Verfahren der eingangs genannten Art erfindungsgemäß dahingehend weitergebildet, dass Raumwärmetauscher unterschiedlicher Priorität definiert werden, wobei ausgehend von einer anlagenspezifischen Zielspreizung bei Raumwärmetauschern hoher Priorität eine geringere Zielspreizung zugelassen und bei Raumwärmetauschern niedriger Priorität eine größere Zielspreizung sichergestellt wird, und dass bei Betrieb eines Raumwärmetauschers hoher Priorität bei einer geringeren Spreizung der Volumenstrom durch zumindest einen Raumwärmetauscher niedriger Priorität mit einer größeren Spreizung derart verändert wird, dass durch Vermischung des Rücklaufmediums aus allen Raumwärmetauschern der Heizungsanlage die Einstellung einer für das Heizgerät der Heizungsanlage optimierten Rücklauftemperatur erfolgt.

Beim erfindungsgemäßen Verfahren werden somit solche Raumwärmetauscher als Raumwärmetauscher hoher Priorität definiert, von denen ständig oder temporär eine Heizleistung verlangt wird, die über der Heizleistung liegt, welche unter Einhaltung der anlagenspezifischen Zielspreizung erreicht werden kann. Dies ist beispielsweise dann der Fall, wenn der oder die Raumwärmetauscher in einem Raum bzw. Bereich zur Bereitstellung der dort nötigen Wärmeleistung an sich unterdimensioniert sind oder wenn ein Anwender kurzfristig eine schnelle Aufheizung wünscht und das Raumwärmetauscherventil daher weit öffnet. Um die überschüssigen Wärmemengen, die aus derart betriebenen Raumwärmetauschern in den Rücklauf eingespeist werden zur Erreichung einer optimierten Rücklauftemperatur der Heizungsanlage zu kompensieren, sieht das erfindungsgemäße Verfahren nun vor, gewisse Raumwärmetauscher als Raumwärmetauscher niedriger Priorität zu definieren, wobei für derartige Raumwärmetauscher eine sehr große Spreizung sichergestellt wird, die über der anlagenspezifischen Zielspreizung liegen soll. Derartige Raumwärmetauscher sind beispielsweise Raumwärmetauscher in Räumen bzw. Bereichen, die für den dortigen Wärmebedarf überdimensioniert sind, oder Raumwärmetauscher in Bereichen, in denen keine hohe Aufwärmdynamik gefordert wird oder in denen lediglich eine gewisse Grundversorgung mit Wärme sichergestellt werden soll. In diesem Zusammenhang sind Keller und Hobbyräume, geheizte Garagen, Turnsäle, Nebenräume und ähnliche Bereiche von Objekten gemeint. In derartigen Bereichen können sehr große Spreizungen in Kauf genommen werden, da dort im Normalfall kein schnelles Aufheizen gefordert ist, und es ausreicht, wenn zu einer definierten Tageszeit eine gewisse Wärmemenge geliefert wird, sodass ein vollständiges Auskühlen verhindert wird. Durch den Betrieb von Raumwärmetauschern niedriger Priorität bei einer großen Spreizung, d.h. mit sehr niedrigen Rücklauftemperaturen, steht relativ kühles Rücklaufmedium zur Verfügung, welches sich im Rücklauf der Heizungsanlage mit dem heißen Heizmedium aus den Raumwärmetauschern hoher Priorität vermischt, sodass ein Temperaturausgleich stattfindet und insgesamt eine annehmbar niedrige Rücklauftemperatur erreicht und die Anlage trotz der Über- und Unterdimensionierungen der einzelnen Raumwärmetauscher effizient betrieben werden kann. Die Erfindung geht somit insofern von dem eingangs dargestellten Konzept des hydraulischen Abgleichs ab, als bewusst unterschiedliche Spreizungen eingestellt und durch geeignete Begrenzer auch fixiert werden können, sodass die geschilderten Abweichungen von der anlagenspezifischen Zielspreizung in den Raumwärmetauschern der Heizungsanlage unter Ausnutzung aller Heizflächen der Heizungsanlage ausgeglichen werden, wodurch auch nicht optimal ausgelegte Heizungsanlagen, wie sie beispielsweise häufig in Altbauten anzutreffen sind, auf ein zufriedenstellendes energetisches Effizienzniveau gehoben werden können.

Die jeweils tatsächlich erreichte Zielspreizung hängt klarerweise davon ab, wie viele Heizkörper einer Anlage nach dem Einstellen überhaupt betrieben werden, da durch das Schließen von Raumwärmetauscherventilen durch einen Benutzer der Volumenstrom und damit der Fließdruck in den in Betrieb verbliebenen Raumwärmetauschern steigt und somit die Zielspreizung wiederum unterschritten werden kann. Diesem Effekt kann durch eine variable Steuerung der Förderpumpe der Heizungsanlage begegnet werden. Im einfachsten Fall wird die erfindungsgemäß gewünschte Abgleichung jedoch auch erreicht, wenn die Zielspreizung für den Fall, dass alle Raumwärmetauscherventile geöffnet sind, in den jeweiligen Heizkörpern sichergestellt wird.

Bei einer bevorzugten Ausführungsform der vorliegenden Erfindung wird bei Raumwärmetauschern niedriger Priorität die Spreizung so groß gewählt, dass die Einstellung der Rücklauftemperatur derart erfolgt, dass die anlagenspezifische Zielspreizung erreicht wird. Bei der anlagenspezifischen Zielspreizung können die jeweiligen Heizgeräte, wie z.B. Gas- und Ölbrenner, Hackschnitzelheizungen, aber auch andere Wärmequellen wie Fernwärme an ihrem energetischen Optimum betrieben werden, sodass eine bestmögliche Ausnutzung der eingesetzten Energieträger gelingt.

Die Durchführung des erfindungsgemäßen Verfahrens wird erleichtert, wenn Betriebsparameter an allen Raumwärmetauschern bzw. Heizflächen eines Objekts berücksichtigt werden, wobei zur Erzielung des erfindungsgemäß gewünschten Effekts, nämlich dass eine für den jeweils eingesetzten Wärmeerzeuger optimierte Rücklauftemperatur erreicht wird, beispielsweise die Wärmemengen erfasst oder bestimmt werden können und die Wärmelasten, d.h. die überschüssigen Wärmemengen aus Raumwärmetauschern hoher Priorität bei Raumwärmetauschern niedriger Priorität entsprechend eingespart werden können. Um diesen Ansatz in der Praxis schnell und kontrollierbar durchführen zu können, ist das erfindungsgemäße Verfahren bevorzugt dahingehend weitergebildet, dass die Vorlauf- und Rücklauftemperaturen der einzelnen Raumwärmetauscher erfasst und an eine zentrale Recheneinheit übermittelt werden, die Stellwerte für die einstellbare und/oder fixierbare Begrenzung aller Raumwärmetauscherventile bestimmt und als Stellsignal an insbesondere abnehmbare Stellmotoren an den Raumwärmetauscherventilen übermittelt werden. Zu diesem Zweck sind an den Raumwärmetauschern Temperatursensoren am Vorlauf und am Rücklauf des Raumwärmetauschers angebracht, die die Messwerte drahtlos oder kabelgebunden an die zentrale Recheneinheit übertragen. Dort werden die Werte mit den Sollwerten verglichen und nach einer entsprechenden Wartezeit die Befehle für den nächsten Schaltschritt gesendet. Erfindungsgemäß werden in der zentralen Recheneinheit in an sich bekannter Weise die Wärmemengen errechnet, die von einzelnen Raumwärmetauschern in den Rückfluss abgegeben werden, wobei eine entsprechende Einstellung der einstellbaren und/oder fixierbaren Begrenzung an den Raumwärmetauscherventilen bzw. Thermostatköpfen mit Hilfe von Stellmotoren bzw. Motorköpfen erfolgt. Nachdem das System gemäß dem erfindungsgemäßen Verfahren abgeglichen ist, können die Stellwerte entweder manuell durch mechanische Anschläge fixiert werden oder die
Stellwerte können in den Stellmotoreinheiten abgespeichert werden. Wenn die Stellwerte, die den Durchfluss durch die Raumwärmetauscherventile begrenzen, eingestellt sind, können die Motorköpfe entweder abgenommen werden oder an den Raumwärmetauschern verbleiben. In der zentralen Recheneinheit können die Daten gespeichert und beispielsweise zu Zwecken der Verrechnung der Heizkosten herangezogen werden. Die Daten können hierbei in besonders vorteilhafter Art fernausgelesen werden.

Wie bereits erwähnt, kann die Einstufung eines Raumwärmetauschers als Raumwärmetauscher hoher bzw. niedriger Priorität unter dem Gesichtspunkt erfolgen, ob der jeweilige Raumwärmetauscher für den betreffenden Bereich über- oder unterdimensioniert ist. Die Priorisierung kann jedoch auch dynamisch erfolgen, wobei bevorzugt derart vorgegangen wird, dass zur Berechnung des Stellwertes wenigstens eines Raumwärmetauschers hoher oder niedriger Priorität ein Messwert für die Außentemperatur herangezogen wird.

Wenn die oben erwähnten Stellmotoren bzw. Motorköpfe an den Raumwärmetauschern verbleiben, kann eine besonders günstige adaptive Betriebsweise der Heizungsanlage erreicht werden, mit der auch auf temporäre Benutzeranforderungen an einzelne Raumwärmetauscher in einzelnen Räumen bzw. Bereichen reagiert werden kann. Beispielsweise kann das Verfahren bevorzugt derart durchgeführt werden, dass bei einer temporären Betriebsanforderung an einen Raumwärmetauscher, die zu einer Verringerung der Spreizung am betreffenden Raumwärmetauscher führt, eine Priorisierung dieses Raumwärmetauschers vorgenommen wird, woraufhin zum Ausgleich der Rücklauftemperatur der Heizungsanlage der Volumenstrom von Heizmedium durch zumindest einen Raumwärmetauscher niedriger Priorität erniedrigt wird. Durch diese dynamische Veränderung der Prioritäten der einzelnen Raumwärmetauscher kann somit in gewissen Bereichen eines Objekts der Volumenstrom durch die Raumwärmetauscher verringert werden, sodass aufgrund der dadurch größer werdenden Spreizung an diesen Raumwärmetauschern kühles Rücklaufmedium gewonnen wird. Da die Rückflussmengen von Raumwärmetauschern, die bei einer großen Spreizung, d.h. bei einem geringen Durchfluss betrieben werden, klarerweise verhältnismäßig gering sind, müssen in der Regel zum Ausgleich der überschüssigen Wärmemengen, die aus einem bei zu geringer Spreizung betriebenen Raumwärmetauscher in den Rückfluss eingespeist werden, mehrere Raumwärmetauscher mit einer großen Spreizung betrieben werden, um ausreichend kühles Rückflussmedium zur Verfügung zu stellen.

Wenn beispielsweise in einer Phase, in der ein Objekt eher wenig beheizt wird, eine unerwartete Heizanforderung eines Benutzers erfolgt, wie beispielsweise das schnelle Aufheizen eines Arbeitszimmers in den Nachtstunden, so resultiert am entsprechenden Raumwärmetauscher wiederum eine sehr geringe Spreizung. Das erfindungsgemäße Verfahren kann in diesem Fall bevorzugt derart durchgeführt werden, dass bei einer temporären Betriebsanforderung an einen Raumwärmetauscher, die zu einer Verringerung der Spreizung am betreffenden Raumwärmetauscher führt, eine Priorisierung dieses Raumwärmetauschers vorgenommen wird, woraufhin zum Ausgleich der Rücklauftemperatur der Heizungsanlage der Durchfluss von Heizmedium durch zumindest einen Raumwärmetauscher niedriger Priorität erhöht wird. Diese Maßnahme führt klarerweise dazu, dass die Spreizung in diesem Raumwärmetauschern niedriger Priorität in der Folge abnimmt, jedoch kann durch die Erhöhung des Durchflusses aus diesen Raumwärmetauschern kühles Rücklaufmedium gewonnen werden, was insgesamt günstig für die Effizienz der Heizungsanlage ist. Es wird also wiederum zumindest ein Raumwärmetauscher mit einer großen Spreizung derart betrieben, dass eine optimierte Rücklauftemperatur resultiert. Dies stellt ebenfalls eine dynamische Definition der Prioritäten dar und wird von der zentralen Recheneinheit vorgenommen. Die zentrale Recheneinheit teilt somit dem Raumwärmetauscher, von dem eine hohe Heizleistung gefordert wird, eine hohe Priorität zu und gestattet durch entsprechende Betätigung der Stellmotoren eine geringe Spreizung und somit eine hohe Heizleistung an dem betreffenden Raumwärmetauscher. Dieser Raumwärmetauscher liefert in der Folge ungünstig heißes Rücklaufmedium in den Rücklauf der Heizungsanlage, worauf bei dem bevorzugten Verfahren eine Erhöhung des Durchflusses durch einen oder mehrere Raumwärmetauscher niedriger Priorität erfolgt. Ein Raumwärmetauscher niedriger Priorität ist hierbei wiederum ein Raumwärmetauscher in einem Raum, in dem zwar nicht unmittelbar eine bestimmte Heizleistung gefordert wird, jedoch wird zur Erhöhung der Gesamteffizienz der Anlage der Durchfluss durch derartige Raumwärmetauscher niedriger Priorität erhöht, sodass durch die Kühlung des Rücklaufs durch das aus diesen Bereichen gewonnene Rücklaufmedium die Effizienz des Wärmeüberträgers im Wärmeerzeuger gesteigert wird. Das bevorzugte Verfahren kann hierbei sogar derart durchgeführt werden, dass nicht nur ein bereits bestehender Durchfluss in einem Raumwärmetauscher niedriger Priorität erhöht wird, sondern dass ein an sich zum betreffenden Zeitpunkt außer Betrieb gesetzter Raumwärmetauscher in Betrieb genommen wird, was wiederum durch ein entsprechendes Stellsignal der zentralen Recheneinheit an den oder die betreffenden Stellmotoren bzw. Motorköpfe erfolgt.

Gemäß einer bevorzugten Ausführungsform des erfindungsgemäßen Verfahrens wird hierbei derart vorgegangen, dass eine temporäre Benutzeranforderung durch Eingabe eines Sollwerts der Raumtemperatur erfolgt, dass der Sollwert an die zentrale Recheneinheit gesendet wird und dass in der zentralen Recheneinheit Stellwerte für den oder die in dem jeweiligen Raum angeordneten Raumwärmetauscher errechnet und als Stellsignal an die Stellmotoren an den Raumwärmetauscherventilen übermittelt werden.

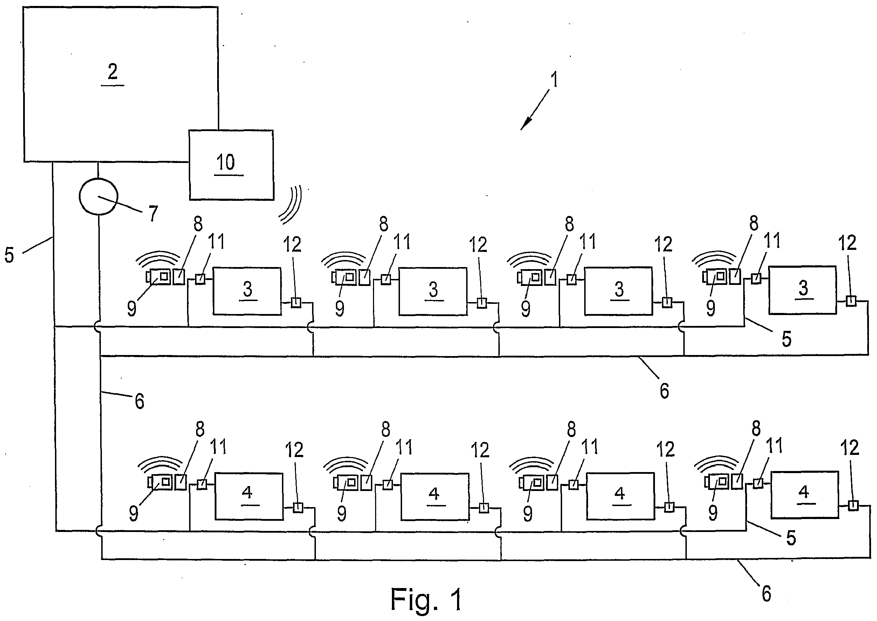

Die Erfindung wird nachfolgend anhand eines in der Zeichnung dargestellten Ausführungsbeispieles näher erläutert. In dieser zeigt Figur 1 eine schematische Darstellung einer Heizungsanlage zur Durchführung des erfindungsgemäßen Verfahrens.

In Figur 1 ist mit 1 eine Heizungsanlage bezeichnet. Die Heizungsanlage 1 weist ein Heizgerät 2 und eine Reihe von Raumwärmetauschern 3 und 4 auf. Die Raumwärmetauscher 3 und 4 sind parallel zwischen einer Vorlaufleitung 5 und einer Rücklaufleitung 6 angeschlossen. Mit 7 ist eine Pumpe zur Förderung des Heizmediums bezeichnet. Die Raumwärmetauscherventile 8 der Raumwärmetauscher 3 und 4 werden mittels Stellmotoren bzw. Motorköpfen 9 verstellt und sind in jeder Lage durch Anschläge begrenzbar. Die Stellmotoren 9 stehen drahtlos oder kabelgebunden mit der zentralen Recheneinheit 10 in Verbindung, die die Daten empfängt und verarbeitet, die von den Temperatursensoren 11 am Vorlauf und den Temperatursensoren 12 am Rücklauf der einzelnen Raumwärmetauscher abgenommen und von Raumtemperatursensoren im Raum gemessen werden. Die zentrale Recheneineinheit verfügt im Idealfall weiters über Daten betreffend die Vorlauftemperatur am Heizgerät, die Pumpendrehzahl und die Außentemperatur sowie die Temperatur in den jeweils zu beheizenden Räumen bzw. Bereichen.

Bei der Durchführung des erfindungsgemäßen Verfahrens werden nun beispielsweise die Raumwärmetauscher 3 als Raumwärmetauscher hoher Priorität und die Raumwärmetauscher 4 als Raumwärmetauscher niedriger Priorität definiert. Wie bereits beschrieben kann dies die Folge einer Über- bzw. Unterdimensionierung sein oder aufgrund temporärer Heizanforderungen durch den Benutzer erfolgen. Wenn nun die Raumwärmetauscher 3 aus den genannten Gründen mit einer geringen Spreizung, also einer hohen Rücklauftemperatur betrieben werden, so gelangt relativ heißes Heizmedium in die Rücklaufleitung 6 und würde zu einer ungünstig hohen Rücklauftemperatur im Heizgerät 2 führen. Um dem zu begegnen, wird nun zumindest einer der Raumwärmetauscher 4, also ein Raumwärmetauscher niedriger Priorität mit einer sehr großen Spreizung betrieben, um eine gewisse Menge kühlen Heizmediums in die Rücklaufleitung 6 zu fördern und dadurch die Rücklauftemperatur beim Heizgerät 2 entsprechend abzusenken.

Die Spreizung an den einzelnen Raumwärmetauschern wird über die Regelung des Durchflusses eingestellt, wobei diese Einstellung aufgrund der Stellsignale erfolgt, welche die zentrale Recheneinheit 10 an die Stellmotoren bzw. Motorköpfe 9 übermittelt.

Wenn nun zusätzlich der Anwender einen oder mehrere der Raumwärmetauscher 3 mit einer noch größeren Heizleistung, d.h. mit einer noch geringeren Spreizung betreibt, so kann dies mit dem erfindungsgemäßen System dadurch ausgeglichen werden, dass beispielsweise der Durchfluss durch einen oder mehrere der Raumwärmetauscher 4 mit Hilfe der Stellmotoren reduziert wird, sodass der Rücklauf zum Heizgerät 2 wiederum auf dem gewünschten Temperaturniveau gehalten werden kann.

Bei einer weniger aufwändigen Verfahrensweise werden die abnehmbaren Stellmotoren lediglich dafür verwendet, den maximalen Durchfluss durch die einzelnen Raumwärmetauscher einmal einzustellen, woraufhin die durch die zentrale Recheneinheit errechneten Stellpositionen mit mechanischen Anschlägen begrenzt und die Stellmotoren wieder abgenommen und herkömmliche Thermostatköpfe aufgesetzt werden.

## Patentansprüche

1. Verfahren zum Einstellen des Volumenstromes von Heiz- und/oder Kühlmedium durch Raumwärmetauscher (3,4) einer Heizungs- bzw. Kühlanlage (1), bei welchem die Zielspreizung der Vorlauf- und Rücklauftemperaturen der einzelnen Raumwärmetauscher (3,4) jeweils durch eine einstellbare und/oder fixierbare Begrenzung des jeweiligen Raumwärmetauscherventils (8) eingestellt wird, wobei Raumwärmetauscher (3,4) unterschiedlicher Priorität definiert werden, wobei ausgehend von einer anlagenspezifischen Zielspreizung bei Raumwärmetauschern hoher Priorität (3) eine geringere Zielspreizung zugelassen und bei Raumwärmetauschern niedriger Priorität (4) eine größere Zielspreizung sichergestellt wird, und dass bei Betrieb eines Raumwärmetauschers hoher Priorität (3) bei einer geringeren Spreizung der Volumenstrom durch zumindest einen Raumwärmetauscher niedriger Priorität (4) mit einer größeren Spreizung derart verändert wird, dass durch Vermischung des Rücklaufmediums aus allen Raumwärmetauschern (3,4) der Heizungsanlage (1) die Einstellung einer für das Heizgerät (2) der Heizungsanlage optimierten Rücklauftemperatur erfolgt, **dadurch gekennzeichnet, dass** zur Berechnung der Stellwerte die von den jeweiligen Raumwärmetauschern (3,4) in den Rücklauf abgegebenen Wärmemengen berechnet werden und die aufgrund einer geringen Spreizung an Raumwärmetauschern hoher Priorität (3) anfallenden erhöhten Wärmemengen durch Einstellung zumindest eines Raumwärmetauschers niedriger Priorität (4) auf eine große Spreizung kompensiert werden.

2. Verfahren nach Anspruch 1, **dadurch gekennzeichnet, dass** die Einstellung der Rücklauftemperatur derart erfolgt, dass die anlagenspezifische Zielspreizung erreicht wird.

3. Verfahren nach Anspruch 1 oder 2, **dadurch gekennzeichnet, dass** die Vorlauf- und Rücklauftemperaturen der einzelnen Raumwärmetauscher (3,4) erfasst und an eine zentrale Recheneinheit (10) übermittelt werden, die Stellwerte für die einstellbare und/oder fixierbare Begrenzung aller Raumwärmetauscherventile (8) bestimmt und als Stellsignal an insbesondere abnehmbare Stellmotoren (9) an den Raumwärmetauscherventilen (8) übermittelt werden.

4. Verfahren nach einem der Ansprüche 1 bis 3, **dadurch gekennzeichnet, dass** zur Berechnung des Stellwertes wenigstens eines Raumwärmetauschers (3,4) hoher oder niedriger Priorität ein Messwert für die Außentemperatur herangezogen wird.

5. Verfahren nach einem der Ansprüche 1 bis 4, **dadurch gekennzeichnet, dass** bei einer temporären Betriebsanforderung an einen Raumwärmetauscher (3,4), die zu einer Verringerung der Spreizung am betreffenden Raumwärmetauscher (3,4) führt, eine Priorisierung dieses Raumwärmetauschers (3,4) vorgenommen wird, woraufhin zum Ausgleich der Rücklauftemperatur der Heizungsanlage (1) der Volumenstrom von Heizmedium durch zumindest einen Raumwärmetauscher niedriger Priorität (4) erniedrigt wird.

6. Verfahren nach einem der Ansprüche 1 bis 4, **dadurch gekennzeichnet, dass** bei einer temporären Betriebsanforderung an einen Raumwärmetauscher (3,4), die zu einer Verringerung der Spreizung am betreffenden Raumwärmetauscher (3,4) führt, eine Priorisierung dieses Raumwärmetauschers (3,4) vorgenommen wird, woraufhin zum Ausgleich der Rücklauftemperatur der Heizungsanlage (1) der Volumenstrom von Heizmedium durch zumindest einen Raumwärmetauscher niedriger Priorität (4) erhöht wird.

7. Verfahren nach einem der Ansprüche 1 bis 6, **dadurch gekennzeichnet, dass** eine temporäre Benutzeranforderung durch Eingabe eines Sollwerts der Raumtemperatur erfolgt, dass der Sollwert an die zentrale Recheneinheit (10) gesendet wird und dass in der zentralen Recheneinheit (10) Stellwerte für den oder die in dem jeweiligen Raum angeordneten Raumwärmetauscher (3,4) errechnet und als Stellsignal an die Stellmotoren (9) an den Raumwärmetauscherventilen (8) übermittelt werden.

## Claims

1. A method for setting the volumetric flow rate of a heating and/or cooling medium by means of room heat exchangers (3,4) of a heating or cooling system (1), in which the target spread of the flow and return temperatures for the individual room heat exchangers (3,4) is in each case set by limiting the respective room heat exchanger valve (8) in an adjustable and/or fixable manner, wherein room heat exchangers (3,4) of varying priority are defined, wherein, based on a system-specific target spread, for high-priority room heat exchangers (3) a lower target spread is allowed, and for low-priority room heat exchangers (4) a higher target spread is ensured, and that, during the operation of a high-priority room heat exchanger (3) with a lower spread, the volumetric flow through at least one low-priority room heat exchanger (4) with a higher spread is changed in such a way that a return temperature optimized for the heating device (2) of the heating system is set by mixing the return medium from all room heat exchangers (3,4) of the heating system, **characterized in that** the amounts of heat released by the respective room heat exchangers (3,4) into the return flow are determined to calculate the control values, and the elevated amounts of heat arising on high-priority room heat exchangers (3) due to a low spread are balanced out by setting at least one low-priority room heat exchanger (4) to a high spread.

2. The method according to claim 1, **characterized in that** the return temperature is set in such a way as to achieve the system-specific target spread.

3. The method according to claim 1 or 2, **characterized in that** the supply and return temperatures of the individual room heat exchangers (3,4) are acquired and transmitted to a central processing unit (10), which determines control values for the adjustable and/or fixable limitation of all room heat exchanger valves (8), and transmits them as a control signal to in particular removable actuators (9) on the room heat exchanger valves (8).

4. The method according to one of claims 1 to 3, **characterized in that** a measured value for the outside temperature is drawn upon to calculate the control value for at least one high or low-priority room heat exchanger (3,4).

5. The method according to one of claims 1 to 4, **characterized in that**, given a temporary operational requirement on a room heat exchanger (3,4) that leads to a decrease in the spread on the room heat exchanger (3,4) in question, this room heat exchanger (3,4) is subjected to prioritization, whereupon the volumetric flow rate of heating medium through at least one low-priority room heat exchanger (4) is lowered to balance the return temperature of the heating system (1).

6. The method according to one of claims 1 to 4, **characterized in that**, given a temporary operational requirement on a room heat exchanger (3,4) that leads to a decrease in the spread on the room heat exchanger (3,4) in question, this room heat exchanger (3,4) is subjected to prioritization, whereupon the volumetric flow rate of heating medium through at least one low-priority room heat exchanger (4) is raised to balance the return temperature of the heating system (1).

7. The method according to one of claims 1 to 6, **characterized in that** a temporary user requirement is issued by inputting a desired value for the ambient temperature, the desired value is sent to the central processing unit (10), and control values for the room heat exchanger(s) (3,4) situated in the respective room are calculated in the central processing unit (10) and transmitted as a control signal to the actuators (9) on the room heat exchanger valves (8).

## Revendications

1. Procédé pour régler le débit volumique d'un milieu chauffant et/ou d'un milieu réfrigérant au moyen d'échangeurs de chaleur ambiante (3, 4) d'une installation de chauffage ou de refroidissement (1), dans laquelle l'intervalle cible des températures départ et retour des échangeurs de chaleur ambiante individuels (3, 4) est respectivement réglé par une limitation réglable et/ou fixable de la soupape d'échangeur de chaleur ambiante respective (8), dans lequel des échangeurs de chaleur ambiante (3, 4) de différente priorité sont définis, dans lequel, en partant d'un intervalle cible spécifique à l'installation dans des échangeurs de chaleur ambiante de plus haute priorité (3), un intervalle cible plus faible est autorisé et, dans le cas des échangeurs de chaleur ambiante de plus faible priorité (4), un intervalle cible plus grand est garanti, et, dans le cadre d'un fonctionnement d'un échangeur de chaleur ambiante de plus haute priorité (3), lors d'un intervalle plus faible, le débit volumique est modifié par au moins un échangeur de chaleur ambiante de plus faible priorité (4) avec un intervalle plus grand de sorte que, par mélange du milieu de retour venant de tous les échangeurs de chaleur ambiante (3, 4) de l'installation de chauffage (1), le réglage d'une température de retour optimisée pour l'appareil de chauffage (2) de l'installation de chauffage se produise, **caractérisé en ce que**, pour le calcul des valeurs de réglage, on calcule les quantités de chaleur délivrées dans le retour par les échangeurs de chaleur ambiante respectifs (3, 4) et les quantités de chaleur accrues apparaissant en raison d'un intervalle faible sur les échangeurs de chaleur ambiante de plus haute priorité (3) sont compensées par réglage d'au moins un échangeur de chaleur ambiante de plus faible priorité (4) sur un grand intervalle.

2. Procédé selon la revendication 1, **caractérisé en ce que** le réglage de la température de retour se fait en sorte d'atteindre l'intervalle cible spécifique à l'installation.

3. Procédé selon la revendication 1 ou 2, **caractérisé en ce que** les températures départ et retour des échangeurs de chaleur ambiante individuels (3, 4) sont détectées et transmises à une unité centrale de traitement (10) qui détermine des valeurs de réglage qui sont destinées à la limitation réglable et/ou fixable de toutes les soupapes d'échangeurs de chaleur ambiante (8) et qui sont transférées aux soupapes d'échangeurs de chaleur ambiante (8) comme signal de réglage sur des moteurs de réglage (9) en particulier amovibles.

4. Procédé selon l'une quelconque des revendications 1 à 3, **caractérisé en ce qu'**une valeur de mesure pour la température externe est extraite pour calculer la valeur de réglage d'au moins un échangeur de chaleur ambiante (3, 4) de priorité plus élevée ou moins élevée.

5. Procédé selon l'une quelconque des revendications 1 à 4, caractérisé en ce, dans une demande de fonctionnement temporaire sur un échangeur de chaleur ambiante (3, 4), qui mène à une réduction de l'intervalle sur l'échangeur de chaleur ambiante concerné (3, 4), une mise en priorité de cet échangeur de chaleur ambiante (3, 4) est effectuée, moyennant quoi, pour compenser la température de retour de l'installation de chauffage (1), le débit volumique du milieu de chauffage est abaissé par au moins un échangeur de chaleur ambiante de plus faible priorité (4).

6. Procédé selon l'une quelconque des revendications 1 à 4, caractérisé en ce, lors d'une demande de fonctionnement temporaire sur un échangeur de chaleur ambiante (3, 4), qui mène à une réduction de l'intervalle sur l'échangeur de chaleur ambiante concerné (3, 4), une mise en priorité de cet échangeur de chaleur ambiante (3, 4) est effectuée, moyennant quoi, pour compenser la température de retour de l'installation de chauffage (1), le débit volumique du milieu de chauffage est augmenté par au moins un échangeur de chaleur ambiante de plus faible priorité (4).

7. Procédé selon l'une quelconque des revendications 1 à 6, **caractérisé en ce qu'**une demande d'utilisateur temporaire se fait par saisie d'une valeur nominale de la température ambiante, la valeur nominale est envoyée à l'unité centrale de traitement (10) et, dans l'unité centrale de traitement (10), des valeurs de réglage pour le ou les échangeurs de chaleur ambiante agencés dans l'espace respectif (3, 4) sont calculées et sont transférées comme signal de réglage sur les moteurs de réglage (9) aux soupapes d'échangeurs de chaleur ambiante (8).
